# EUROPÄISCHE PATENTSCHRIFT

(11) **EP 0 313 952 B1**
(45) Veröffentlichungstag und Bekanntmachung des Hinweises auf die Patenterteilung: **15.12.1993**
(21) Anmeldenummer: 88117233.2
(22) Anmeldetag: 17.10.1988
(51) Int. Cl.: H01H 13/70

(54) **Tastenkappe für eine Tastatur**
Push-button for keyboard
Bouton poussoir pour clavier

(30) Priorität: 26.10.1987 DE 3736116
(43) Veröffentlichungstag der Anmeldung: 03.05.1989
(73) Patentinhaber: Preh-Werke GmbH & Co. KG, 97616 Bad Neustadt (DE)
(72) Erfinder: Bauer, Karl-Heinz, D-8740 Bad Neustadt/Saale (DE)

(56) Entgegenhaltungen:
- EP-A- 0 123 184
- DE-A- 3 607 689
- DE-U- 7 441 331
- DE-U- 7 901 713
- FR-A- 2 324 108
- US-A- 3 627 935
- US-A- 4 056 701

## Beschreibung

Die Erfindung betrifft eine Tastenkappe für ein Tastenfeld mit einem Rahmen, der eine Kammer bildet, in der ein Schaltelement und ein Leuchtelement angeordnet sind, wobei die Tastenkappe am Rahmen geführt ist, die Kammer abdeckt und für das Schaltelement einen Bedienbereich und vor dem Leuchtelement eine durchscheinende Symbolzone aufweist.

Derartige Tastenkappen sind bekannt. Die bekannten Tastenkappen sind Kunststoff-Spritzteile. Durch ein Mehrfarben-Spritzverfahren beispielsweise ist an der Tastenkappe eine transparente Symbolzone geschaffen. Eine Änderung der Symbolzone in der Fertigung ist aufwendig, da dann die Spritzwerkzeuge geändert werden müssen. Außerdem ist durch die notwendige Dicke des gespritzten Kunststoffs in der Symbolzone die Transparenz eingeschränkt.

Es ist auch bekannt, in die Tastenkappe ein transparentes Fenster einzuspritzen und dieses frontseitig mit einem Symbol zu bedrucken. Das Bedrucken solcher Fenster ist in der Fertigung aufwendig. Außerdem hält der frontseitige Druck der zu berücksichtigenden Beanspruchung nicht dauerhaft stand.

Außerdem ist es auch bekannt, in die Tastenkappe bedruckte oder geformte Fensterteile einzusetzen. Eine Fertigung solcher Fensterteile ist ebenfalls aufwendig. Darüber hinaus erschwert die Montage des Fensterteils an der Tastenkappe die Fertigung.

Bei der in der DE-OS 26 23 229 beschriebenen Tastatur ist die Tastenkappe von einer Folie gebildet, die sichtseitig mit Symbolen bedruckt ist. Eine durchscheinende Symbolzone ist nicht vorgesehen. Außerdem bildet die Folie selbst in ihrer Fläche den Bedienbereich. Dies ist für die Tastenbetätigung oft unerwünscht, da der Benutzer den eigentlichen Bedienbereich taktil schwer findet, was insbesondere bei der Bedienung des Tastenfeldes im Dunkeln ungünstig ist. Ähnliche Tastenkappen sind auch in der DE-AS 1 165 129 und der US-PS 3 627 935 beschrieben.

Aufgabe der Erfindung ist es, eine Tastenkappe der eingangs genannten Art vorzuschlagen, die sich in der Herstellung einfach an Gestaltungswünsche des Bedienbereichs und der Symbolzone anpassen läßt.

Erfindungsgemäß ist obige Aufgabe dadurch gelöst, daß die Tastenkappe aus einer flexiblen, durchscheinenden Folie in flacher Form besteht, daß die Folie mit einem Randbereich am Rahmen festgelegt ist, daß an die Folie im Abstand vom Randbereich ein Körper als Bedienbereich angespritzt ist, daß die Folie zwischen dem Randbereich und dem Körper einen Gelenkbereich bildet und daß die Folie neben dem Körper die Symbolzone aufweist, in der die Folie bedruckt ist.

Bei einer derartigen Tastenkappe läßt sich die Formgestaltung des Bedienbereichs gezielt an den jeweiligen Gestaltungswunsch durch ein entsprechendes Anspritzwerkzeug anpassen, ohne daß der Aufbau der Folie im übrigen geändert werden muß. Außerdem läßt sich auch die Symbolzone durch eine entsprechende Bedruckung an die Gestaltungswünsche anpassen, ohne daß hierfür die Form des den Bedienbereich bildenden Körpers geändert werden muß. Beispielsweise ist es dadurch in der Herstellung einfach, die Symbole an das jeweilige Gerät oder dessen Bedienerkreis anzupassen.

Beim Einsatz der Tastenkappe ist vorteilhaft, daß der den Bedienbereich bildende Körper vom Benutzer leicht fühlbar und findbar ist und dieser Körper den Beanspruchungen dauerhaft standhält.

Günstig ist weiterhin, daß die Symbolzone eine hohe Transparenz aufweist, so daß auch verschiedenfarbige Symbole aufgedruckt werden können. Auch ein Leuchtelement schwacher Leuchtkraft genügt zur Beleuchtung der Symbolzone. Da die Folie ohne weiteres von der Rückseite bedruckt werden kann, sind die Symbole gegen Beanspruchungen von der Sichtseite her geschützt.

Günstig bei dem beschriebenen Aufbau der Tastenkappe ist weiterhin, daß die Tastenkappe nur eine geringe Bautiefe aufweist, so daß sehr flache Tastenfelder gestaltet werden können.

Günstig ist auch, daß die die Tastenkappen bildenden Folien nicht einzeln bedruckt werden müssen, sondern am Band oder in Flächeneinheiten (Nutzen) bedruckt werden können.

Die beschriebenen Tastenkappen können beispielsweise bei Tastenfeldern in der Kraftfahrzeugelektronik, der Unterhaltungselektronik oder bei Computertastaturen verwendet werden.

Weitere vorteilhafte Ausgestaltungen der Erfindung ergeben sich aus den Unteransprüchen und der folgenden Beschreibung von Ausführungsbeispielen.

In der Zeichnung zeigen:
- Figur 1: eine Ansicht eines Tastenfeldes mit zwei Reihen von Tastenkappen,
- Figur 2: einen Schnitt längs der Linie II-II nach Figur 1
und
- Figur 3: eine andere Ausgestaltung einer Tastenkappe, im Schnitt.

In einen Grundrahmen (1) ist ein Einsatzrahmen (2) eingesteckt. Der Grundrahmen (1) und der Einsatzrahmen (2) bilden Kammern (3). In jeder Kammer (3) ist ein Schaltelement (4) und ein Leuchtelement (5) angeordnet.

Das Schaltelement (4) weist einen elastischen Schaltdom (6) auf, unter dem elektrische Kontakte angeordnet sind und an dem ein Schaltstößel (7) anliegt, welcher in dem Grundrahmen (1) geführt ist.

Das Leuchtelement (5) ist von einem Lichtleiter gebildet. Die Lichtleiter der Kammern (3) stehen miteinander in Verbindung und sind von einer gemeinsamen Leuchtquelle beleuchtet.

Jede Kammer (3) ist von einer flexiblen, durchscheinenden Folie (8) abgedeckt. Die Folie (8) weist einen Randbereich (9) auf, mit dem sie am Einsatzrahmen (2) festgelegt ist. Der Einsatzrahmen (2) weist hierfür Zapfen (10) auf, über welche die Folie (8) mit Löchern (11) des Randbereichs (9) gesteckt ist.

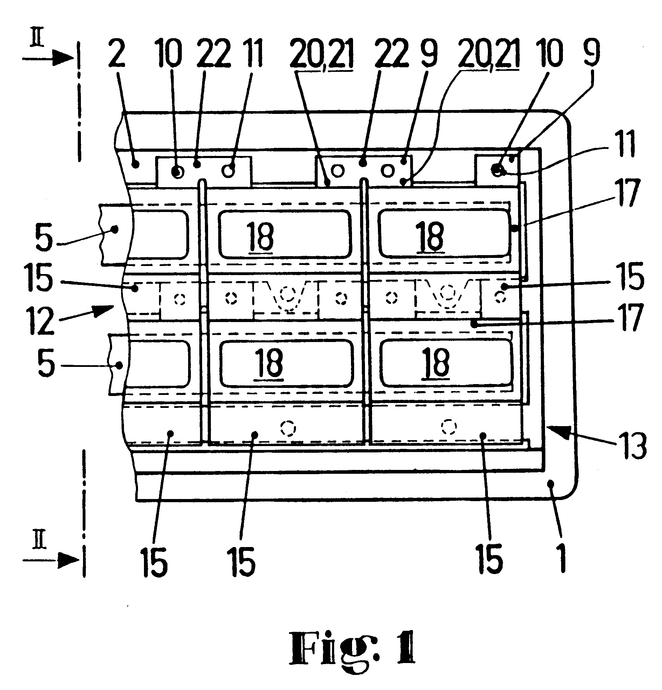

Beim Ausführungsbeispiel sind zwei Reihen (12, 13) von Tastenkappen vorgesehen. Die Randbereiche (9) der oberen Reihe (12) der Tastenkappen sind von einer Blendleiste (14) abgedeckt. Diese ist in Figur 1 nicht dargestellt.

An den dem Randbereich (9) gegenüberliegenden Rand der Folie (8) ist als Bedienbereich ein Körper (15) angespritzt. Dieser bildet einen mit Riffelung versehenen Wulst. An dessen Innenseite ist ein Ansatz (16) angeformt, der auf dem Schaltstößel (7) aufsteht.

Einstückig mit dem Körper (15) ist an die Folie (8) eine Umrandung (17) angespritzt, welche die Folie (8) in einer fensterartigen Symbolzone (18) freiläßt. Die Symbolzone (18) liegt vor dem Leuchtelement (5). In der Symbolzone (18) ist die flexible, durchscheinende Folie (8) auf ihrer dem Leuchtelement (5) zugewandten Seite mit einem Druck (19), insbesondere Siebdruck, versehen, welcher das jeweilige Symbol und/oder die jeweilige Farbgestaltung bildet. Der Druck (19) kann so gestaltet sein, daß die Symbolzone (18) bei Tageslicht in einer anderen Farbe erscheint als bei Dunkelheit, wenn überwiegend das Leuchtelement (5) wirksam ist.

Zwischen der Umrandung (17) und dem Einsatzrahmen (2) besteht ein Spalt (20), den die Folie (8) überbrückt. Die Folie (8) bildet hier einen Gelenkbereich (21), welcher die Bewegung der Tastenkappe erlaubt. Die Umrandung (17) dient nicht nur der optischen Begrenzung der Symbolzone (18), sondern führt gleichzeitig zu einer Versteifung der Folie (8) in dem Bereich der Symbolzone (18) zwischen dem Gelenkbereich (21) und dem Körper (15).

Der Körper (15) ist so gestaltet, daß er den Randbereich (9) der benachbarten Folie (8) der unteren Reihe (13), in dem diese an Zapfen (10) befestigt ist, abdeckt.

Die den einzelnen Kammern (3) zugeordneten Folien (8) werden vorzugsweise nicht als Einzelstücke, sondern am Band gefertigt. Die Folien (8) der oberen Reihe (12) und der unteren Reihe (13) werden in den Symbolzonen (18) am Band bedruckt. Anschließend erfolgt ein Ausstanzen der den einzelnen Kammern (3) zugeordneten Folien (8), wobei die Folien (8) im der Befestigung dienenden Randbereich (9) miteinander verbunden bleiben. Diese Stellen sind in Figur 1 mit (22) bezeichnet. Außerdem werden die Löcher (11) gestanzt und die Körper (15) mit den Umrandungen (17) am Band angespritzt.

Die Folien (8) der oberen Reihe (12) und der unteren Reihe (13) werden danach auf die Zapfen (10) aufgedrückt. Sie sind dadurch an dem Einsatzrahmen (2) gehalten und auf einfache Weise in der richtigen Lage gegenüber den Kammern (3) justiert.

Bei der Betätigung einer Tastenkappe wird auf deren die Symbolzone (18) überragenden Körper (15) gedrückt. Der Gelenkbereich (21) gestattet eine Verschwenkung so, daß der Schaltstößel (7) den Schaltdom (6) niederdrückt. Die Rückstellkraft für die Folie (8) bringt der Schaltdom (6) auf. Dadurch, daß zwischen dem Gelenkbereich (21) und dem Körper (15) die Symbolzone (18) liegt, ist ein hinreichender Schalthub der Tastenkappe möglich.

Um zu vermeiden, daß die Folie (8) zu weit aus dem Grundrahmen (1) herausgeschwenkt werden kann, können am Körper (15) Haken (25) angeordnet sein, die den Verschwenkbereich begrenzen.

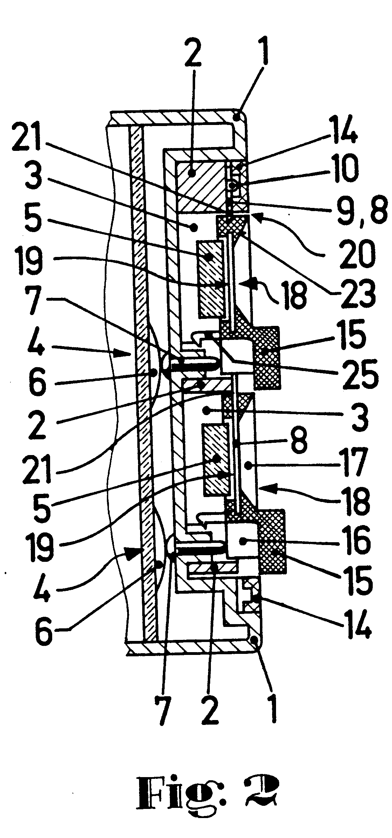

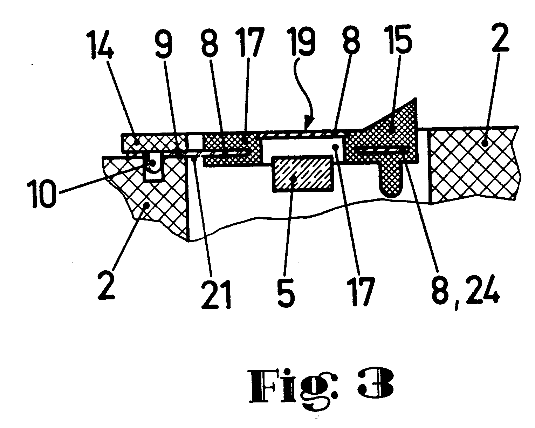

Beim Ausführungsbeispiel nach Figur 2 ist die Folie (8) im Symbolbereich (18) gegenüber der Blendleiste (14) bzw. der Umrandung (17), die mit Schrägen (23) zur Folie (8) verläuft, versenkt. Beim Ausführungsbeispiel nach Figur 3 dagegen erstreckt sich die Folie (8) im Symbolbereich (18) bündig mit der Blendleiste (14). Hierfür wird beim Anspritzen der Umrandung (17) und des Körpers (15) die Folie (8) mittels eines Stempels in der Symbolzone (18) vorgedrückt. Vorzugsweise wird sie dabei freigeschnitten. Die Umrandung (17) bildet dann die Verbindung des Gelenkbereichs (21) und der Symbolzone (18) sowie eines Teils (24) der Folie (8), der sich in dem Körper (15) erstreckt.

In anderer Ausgestaltung der Erfindung kann die angespritzte Umrandung (17) wegfallen. Eine optische Umrahmung der Symbolzone (18) kann dann durch eine entsprechende Bedruckung erfolgen.

Die Folien (8) müssen nicht zwischen den einzelnen Kammern (3) und/oder den einzelnen Reihen (12, 13) getrennt sein. Es kann sich eine Folie durchgehend über mehrere Kammern (3) bzw. Reihen (12, 13) erstrecken. Diese weist dann im Bereich der Körper (15) Durchbrechungen auf, um deren Verankerung an der Folie zu gewährleisten.

## Patentansprüche

1. Tastenkappe für ein Tastenfeld mit einem Rahmen, der eine Kammer bildet, in der ein Schaltelement und ein Leuchtelement angeordnet sind, wobei die Tastenkappe am Rahmen geführt ist, die Kammer abdeckt und für das Schaltelement einen Bedienbereich und vor dem Leuchtelement eine durchscheinende Symbolzone aufweist,
dadurch gekennzeichnet,
daß die Tastenkappe aus einer flexiblen, durchscheinenden Folie (8) in flacher Form besteht, daß die Folie (8) mit einem Randbereich (9) am Rahmen (2) festgelegt ist, daß an die Folie (8) im Abstand vom Randbereich (9) ein Körper (15) als Bedienbereich angespritzt ist, daß die Folie (8) zwischen dem Randbereich (9) und dem Körper (15) einen Gelenkbereich (21) bildet und daß die Folie (8) neben dem Körper (15) die Symbolzone (18) aufweist, in der die Folie (8) bedruckt ist.

2. Tastenkappe nach Anspruch 1,
dadurch gekennzeichnet,
daß der Körper (15) an den dem Gelenkbereich (21) gegenüberliegenden Rand der Folie (8) angespritzt ist und die Symbolzone (18) zwischen dem Körper (15) und dem Gelenkbereich (21) liegt.

3. Tastenkappe nach Anspruch 1 oder 2,
dadurch gekennzeichnet,
daß der Körper (15) die Symbolzone (18) der Folie (8) überragt.

4. Tastenkappe nach einem der vorhergehenden Ansprüche,
dadurch gekennzeichnet,
daß an den Körper (15) ein Ansatz (16) zur Beaufschlagung eines Schaltstößels (7) des Schaltelements (4) angeformt ist.

5. Tastenkappe nach einem der vorhergehenden Ansprüche,
dadurch gekennzeichnet,
daß der Körper (15) wulstförmig ausgebildet ist.

6. Tastenkappe nach einem der vorhergehenden Ansprüche,
dadurch gekennzeichnet,
daß das Schaltelement (4) über den Körper (15) die Rückstellkraft für die Tastenkappe aufbringt.

7. Tastenkappe nach einem der vorhergehenden Ansprüche,
dadurch gekennzeichnet,
daß die Symbolzone (18) auf ihrer dem Leuchtelement (5) zugewandten Seite bedruckt ist.

8. Tastenkappe nach einem der vorhergehenden Ansprüche,
dadurch gekennzeichnet,
daß die Symbolzone (18) von einer angespritzten Umrandung (17) umgeben ist, die einstückig mit dem Körper (15) ist.

9. Tastenkappe nach einem der vorhergehenden Ansprüche,
dadurch gekennzeichnet,
daß die Folie (8) in der Symbolzone (18) gegenüber der Umrandung (17) versenkt verläuft.

10. Tastenkappe nach einem der vorhergehenden Ansprüche,
dadurch gekennzeichnet,
daß die Folie (8) in der Symbolzone (18) gegenüber ihrem Gelenkbereich (21) ausgedrückt ist, so daß die Symbolzone (18) bündig mit der Sichtseite des Rahmens (2) verläuft.

11. Tastenkappe nach einem der vorhergehenden Ansprüche,
dadurch gekennzeichnet,
daß der Rahmen (2) Zapfen (10) aufweist, auf die der Randbereich (9) der Folie (8) mit Löchern (11) gesteckt ist.

12. Tastenkappe nach einem der vorhergehenden Ansprüche,
dadurch gekennzeichnet,
daß der Randbereich (9) der Folie (8) von einer Blendleiste (14) oder dem Körper (15) einer benachbarten Tastenkappe abgedeckt ist.

13. Tastenkappe nach einem der vorhergehenden Ansprüche,
dadurch gekennzeichnet,
daß die Folien (8) benachbarter Tastenkappen in den Randbereichen (9), in denen sie am Rahmen (2) festgelegt sind, einstückig miteinander in Verbindung (22) stehen.

14. Tastenkappe nach einem der vorhergehenden Ansprüche,
dadurch gekennzeichnet,
daß die Folien (8) benachbarter Tastenkappen ohne Freischnitt ineinander übergehen.

## Claims

1. Push button cover for a keyboard having a frame which forms a chamber, in which a switching element and a lighting element are arranged, wherein the push button cover is guided on the frame, covers the chamber and has an operator area for the switching element and a transparent symbol zone in front of the lighting element, characterised in that
the push button cover is made of a flexible transparent film (8) in flat form, in that the film (8) is fixed to the frame (2) with an edge area (9), in that a body (15) is moulded on to the film (8) at a distance from the edge area (9) as an operator area, in that the film (8) forms a joint region (21) between the edge area (9) and the body (15), and in that near the body (15) the film has the symbol zone (18) in which the film (8) is printed on.

2. Push button cover according to claim 1, characterised in that the body (15) is moulded on to the edge of the film (8) opposite the joint region (21), and the symbol zone (18) is between the body (15) and the joint region (21).

3. Push button cover according to claim 1 or 2, characterised in that the body (15) projects over the symbol zone (18) of the film (8).

4. Push button cover according to one of the preceding claims, characterised in that a shoulder (16) for acting on a switching rod (7) of the switching element (4) is formed on the body (15).

5. Push button cover according to one of the preceding claims, characterised in that the body (15) is formed as a bead.

6. Push button cover according to one of the preceding claims, characterised in that the switching element (4) applies the restoring force for the push button cover via the body (15).

7. Push button cover according to one of the preceding claims, characterised in that the symbol zone (18) is printed on its side facing the lighting element (5).

8. Push button cover according to one of the preceding claims, characterised in that the symbol zone (18) is surrounded by a moulded border (17) which is integral with the body (15).

9. Push button cover according to one of the preceding claims, characterised in that the film (8) extends in a recessed manner in the symbol zone (18) with respect to the border (17).

10. Push button cover according to one of the preceding claims, characterised in that the film (8) in the symbol zone (18) is pressed out with respect to its joint region (21) so that the symbol zone (18) extends flush with the visible side of the frame (2).

11. Push button cover according to one of the preceding claims, characterised in that the frame (2) has pins (10) onto which the edge area (9) of the film (8) with holes (11) is placed.

12. Push button cover according to one of the preceding claims, characterised in that the edge area (9) of the film (8) is covered by a cover strip (14) or the body (15) of an adjacent push button cover.

13. Push button cover according to one of the preceding claims, characterised in that the films (8) of adjacent push button covers in the edge regions (9) in which they are fixed on the frame (2) are in connection with each other (22) in one piece.

14. Push button cover according to one of the preceding claims, characterised in that the films (8) of adjacent push button covers pass into one another without being cut free.

## Revendications

1. Chapeau ou partie supérieure de touche pour un clavier possédant un cadre formant une chambre dans laquelle sont disposés un élément commutateur et un élément lumineux, le chapeau de touche étant guidé sur le cadre, recouvrant la chambre et présentant une région de frappe pour la commande de l'élément commutateur et une zone de symbole translucide devant l'élément lumineux, chapeau de touche caractérisé en ce qu'il est fait d'une membrane (8) souple, translucide, de forme plate, en ce que la membrane (8) est fixée par une région marginale (9) au cadre (2) ; en ce qu'un corps (15) servant de région de frappe est moulé par injection sur la membrane (8) à distance de la région marginale (9); en ce que la membrane (8) forme une région d'articulation (21) entre la région marginale (9) et le corps (15) et en ce que la membrane (8) présente,à côté du corps (15), la zone de symbole (18), dans laquelle la membrane (8) est imprimée.

2. Chapeau de touche selon la revendication 1, caractérisé en ce que le corps (15) est moulé par injection sur le bord de la membrane (8) situé à l'opposé de la région d'articulation (21) et la zone de symbole (18) est située entre le corps (15) et la région d'articulation (21).

3. Chapeau de touche selon la revendication 1 ou 2, caractérisé en ce que le corps (15) dépasse en hauteur de la zone de symbole (18) de la membrane (8).

4. Chapeau de touche selon une des revendications précédentes, caractérisé en ce qu'une queue (16) est formée sur le corps (15) pour l'actionnement d'un poussoir de commande (7) de l'élément commutateur (4).

5. Chapeau de touche selon une des revendications précédentes, caractérisé en ce que le corps (15) est réalisé sous la forme d'un bourrelet.

6. Chapeau de touche selon une des revendications précédentes, caractérisé en ce que l'élément commutateur (4) fournit la force de rappel du chapeau de touche par l'intermédiaire du corps (15).

7. Chapeau de touche selon une des revendications précédentes, caractérisé en ce que la zone de symbole (18) est imprimée sur son côté dirigé vers l'élément lumineux (5).

8. Chapeau de touche selon une des revendications précédentes, caractérisé en ce que la zone de symbole (18) est entourée d'un encadrement (17) moulé par injection et d'un seul tenant avec le corps (15).

9. Chapeau de touche selon une des revendications précédentes, caractérisé en ce que la membrane (8) est située plus bas que l'encadrement (17) dans la zone de symbole (18).

10. Chapeau de touche selon une des revendications précédentes, caractérisé en ce que la membrane (8) est pressée vers l'extérieur dans la zone de symbole (18), par rapport à sa région d'articulation (21), de sorte que la zone de symbole (18) est située au même niveau que le côté visible du cadre (2).

11. Chapeau de touche selon une des revendications précédentes, caractérisé en ce que le cadre (2) présente des tenons (10), sur lesquels la région marginale (9) de la membrane (8) est fixée à l'aide de trous (11) prévus dans cette région.

12. Chapeau de touche selon une des revendications précédentes, caractérisé en ce que la région marginale (9) de la membrane (8) est recouverte de la réglette de masquage (14) ou du corps (15) d'un chapeau de touche voisin.

13. Chapeau de touche selon une des revendications précédentes, caractérisé en ce que les membranes (8) de chapeaux de touches voisins sont reliées d'un seul tenant entre elles (22) dans les régions marginales (9) où elles sont fixées au cadre (2).

14. Chapeau de touche selon une des revendications précédentes, caractérisé en ce que les membranes de chapeaux de touches voisins se raccordent les unes aux autres sans découpage séparateur.
